# FASCICULE DE BREVET EUROPEEN

(11) **EP 1 235 074 B1**
(45) Date de publication et mention de la délivrance du brevet: **04.11.2009**
(21) Numéro de dépôt: 02290441.1
(22) Date de dépôt: 22.02.2002
(51) Int. Cl.: G01P 15/10

(54) **Accéléromètre miniature à deux cellules**
Miniaturisierter Beschleunigungsmesser mit zwei Masse-Zellen
Miniaturized accelerometer with two mass-frames

(30) Priorité: 26.02.2001 FR 0102575
(43) Date de publication de la demande: 28.08.2002
(73) Titulaire: SAGEM Défense Sécurité, 75015 Paris (FR)
(72) Inventeur: Featonby, Paul David, 75008 Paris (FR); Baudry, Hervé, 95100 Argenteuil (FR); Petroz, Karine, 75004 Paris (FR)
(74) Mandataire: Loisel, Bertrand

(56) Documents cités:
- US-A- 4 872 343
- US-A- 5 095 763
- US-A- 5 456 110

## Description

La présente invention concerne les accéléromètres miniature du type comportant des masses sismiques, dites aussi masses d'épreuve, non ramenées à une position d'équilibre par un asservissement.

Ils sont différents des accéléromètres à pendule asservi, qui peuvent être précis mais sont d'un coût très élevé, comportant des moyens de commande électrostatiques ou électromagnétiques destinés à ramener la masse sismique dans une position déterminée. Ces appareils, fonctionnant en boucle fermée, sont complexes. De plus, ils utilisent dans la plupart des cas une électronique analogique.

On connaît déjà des accéléromètres miniatures à masse pendulaire non asservie, dont chaque masse pendulaire est sollicitée vers une position de repos par une liaison avec une base par une paire de poutres vibrantes placées de façon qu'une accélération suivant un axe sensible crée une contrainte de traction dans une poutre et de compression dans l'autre. Les deux poutres vibrantes, en matériau piézoélectrique sont munies d'électrodes destinées à faire vibrer les poutres à leur fréquence de résonance. La variation de la fréquence de résonance des poutres est représentative de l'accélération appliquée. L'utilisation de deux poutres, une en traction et une en compression, permet, par exploitation différentielle des fréquences de résonance, de linéariser le comportement.

La structure plate de cette disposition (l'épaisseur étant généralement inférieure à 1 mm pour des dimensions en plan pouvant aller jusqu'à 1 cm environ) permet une fabrication simple et économique, par exemple par des procédés d'attaque chimique. La fabrication peut être collective, c'est-à-dire que de nombreux accéléromètres peuvent être simultanément fabriqués sur une même tranche de matériau en général piézoélectrique, mais pouvant être le silicium.

Ces appareils permettent d'obtenir un signal numérique. Ils sont simples à réaliser. Jusqu'ici ils présentent une précision insuffisante pour certaines applications.

On a également proposé (FR-A-2 685 964 et 2 784 752) des accéléromètres miniatures monolithiques, pouvant être fabriqués de façon économique.

Dans un accéléromètre tel que celui suivant le document FR-A-2 685 964, la poutre ou chaque poutre est simple, ce qui crée des problèmes d'isolement, qui ne peuvent être compensés que partiellement et par une structure de filtrage mécanique qui consomme de la surface et ajoute à l'ensemble une souplesse qui fait que les premiers modes de vibration de structure risque de se placer dans la plage de fréquences susceptibles d'être rencontrées pour les applications potentielles.

On connaît également (FR-A-2 784 752) un détecteur accélérométrique ayant un corps monolithique présentant une partie fixe et deux cellules ayant des masses sismiques situées de part et d'autre de la partie fixe, reliées à la partie fixe par des articulations permettant un mouvement autour d'un axe perpendiculaire à l'axe sensible et des capteurs de force à poutre vibrante reliant chacun une des masses à la partie centrale, montés de façon que, lorsqu'une des poutres est soumise à une force de traction due à une accélération suivant l'axe sensible, l'autre poutre est soumise à une force de compression de même valeur.

Cette disposition laisse subsister des défauts, dus notamment à ce que les pieds des cellules supportant les extrémités des poutres vibrantes sont reliés directement par une traverse appartenant à la partie fixe. Cette disposition conduit à un couplage mécanique qui se traduit par un verrouillage des fréquences de vibration des poutres dans le cas d'accélération faible, c'est-à-dire à une zone aveugle. Dans la pratique, il est nécessaire de donner aux poutres des fréquences de résonance très différentes, de sorte que la' compensation des modes communs n'est que partielle et que les performances sont dégradées.

Une solution pour isoler les vibrations des poutres de deux cellules, ayant chacune une masse et une poutre et disposées tête-bêche et symétriquement par rapport à un axe, consiste à constituer chaque poutre de deux lames qui vibrent en opposition de phase, c'est à dire comme les deux branches d'un diapason. Les contraintes que tendent à provoquer les deux lames s'annulent mutuellement.

Dans le cas d'un détecteur massif, de forte épaisseur, ce fractionnement peut se faire en fendant la poutre pour donner naissance à deux lames situées dans le même plan et à la même distance de l'articulation. Mais une telle constitution serait très difficile à réaliser dans le cas des détecteurs miniature d'épaisseur très faible, nettement inférieure au millimètre, que l'on fabrique par des techniques d'attaque anisotrope. La fabrication se fait par gravure dans une seule direction. Pour séparer une lame en deux, il faudrait effectuer une attaque à 90° de cette direction. On utilise plutôt deux lames parallèles l'une à l'autre et à des distances différentes de l'articulation. Les deux lames peuvent avoir sensiblement la même épaisseur que la masse sismique ou une épaisseur plus faible pour accroître la sensibilité. Mais, le bras de levier d'action d'une masse n'est pas le même pour les deux lames qui lui sont associées, d'où des contraintes différentes dans les deux lames.

La présente invention vise notamment à fournir un détecteur accélérométrique miniature mince répondant mieux que ceux antérieurement connus aux exigences de la pratique, notamment en ce qu'il présente une linéarité élevée et écarte les problèmes de couplage et de différence de contrainte, et cela en restant de coût faible, notamment lorsqu'il est réalisé par des techniques se prêtant à une fabrication collective.

Dans ce but, l'invention propose notamment un détecteur accélérométrique monolithique plat comprenant un corps ayant une base et deux cellules de mesure ayant chacune une masse sismique reliée à la base par une articulation permettant à la masse de tourner autour d'un axe perpendiculaire à un axe sensible du détecteur et un capteur de force à poutre vibrante reliant la masse à la base, les cellules étant placées de façon que, lorsqu'une des poutres est soumise à une force de traction due à une accélération suivant l'axe sensible, l'autre poutre est soumise à une force de compression de même valeur, les cellules étant disposées tête-bêche et symétriquement par rapport à un axe, qui peut être celui de moyens de fixation de la base à une structure dont l'accélération est à mesurer, et chaque poutre étant constituée d'au moins deux lames parallèles l'une à l'autre et à des distances différentes de l'articulation, les deux lames d'une même cellule étant reliées à la masse sismique de la cellule par l'intermédiaire d'une charnière commune.

La charnière peut être constituée par une partie rétrécie d'un pied commun des deux lames

Un mode de montage simple, mais non exclusif, consiste à solidariser la base d'un support présentant une excroissance sur laquelle est fixée une face de la base. Il est possible de constituer le corps, les capteurs de force et même le support sous forme monolithique, en ménageant un jeu très faible, pouvant être de quelques dizaines de microns seulement, entre les masses sismiques et le support. Une telle constitution a l'avantage supplémentaire que le support constitue une butée limitant la déformation dans un sens orthogonal à l'axe sensible et évitant la destruction du détecteur.

Le détecteur sera généralement en matériau piézorésistif (céramique ou surtout quartz). Cependant, il est également possible de constituer le détecteur en silicium, ce qui implique que l'excitation des poutres soit réalisée soit par un dépôt local d'une couche piézo-électrique, soit par un autre procédé physique (par exemple capacitif ou magnétique) ou la combinaison de ces procédés.

Comme on l'a indiqué plus haut, le détecteur a une épaisseur faible (souvent environ 500 µm). Un choix approprié du rapport entre les raideurs permet de placer le premier mode de vibration de structure du détecteur de façon orthogonale à l'axe sensible avec une fréquence en dehors des spectres utiles des applications potentielles, sans pour autant diminuer la sensibilité suivant l'axe sensible.

Les lames seront souvent à bords parallèles et à épaisseur constante, pour des raisons de simplicité de fabrication. Toutefois une section droite évolutive est possible. Etant donné que les procédés habituels de fabrication par attaque chimique se prêtent mal à une variation de largeur des lames (c'est à dire à une variation dans le sens orthogonal au plan du corps), une telle variation sera généralement dans le sens de l'épaisseur. L'évolution peut être continue, en donnant aux bords de la lame une forme courbe réduisant la section au centre. Elle peut être obtenue en prévoyant des chanfreins. Cette dernière solution est particulièrement adaptée au cas des détecteurs en quartz dont la structure cristallographique se prête bien à la formation de chanfreins à 60° de la direction des lames ou de la direction orthogonale. Une forme en échelons avec des épaulements à 90° a l'inconvénient au contraire de provoquer des contraintes localisées. La forme évolutive est également utilisable dans le cas d'une poutre constituée d'une seule lame ou de deux lames situées dans le même plan. Des pentes à 60° des cotes des charnières et articulations par rapport à leur axe sont également avantageuses.

Les caractéristiques ci-dessus, ainsi que d'autres, apparaîtront mieux à la lecture de la description qui suit de modes particuliers de réalisation, donnés à titre d'exemples non limitatifs. La description se réfère aux dessins qui l'accompagnent, dans lesquels :
- la figure 1, où l'échelle n'est pas respectée pour plus de clarté, est une vue en perspective simplifiée d'un détecteur suivant un premier mode de réalisation ;
- la figure 2 est une vue en coupe suivant la ligne II-II de la figure 1 ;
- les figures 3, 4 et 5 sont des vues de détail à grande échelle, montrant des formes possibles des lames du mode de réalisation de la figure 1 ; et
- la figure 6, similaire à la figure 1, montre une variante de réalisation utilisant des angles ou chanfreins à 60°.

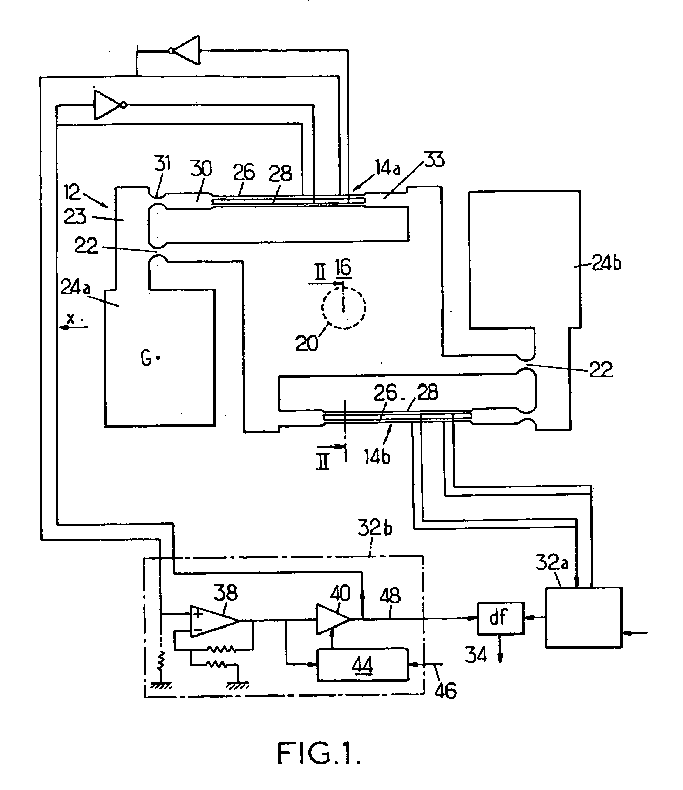

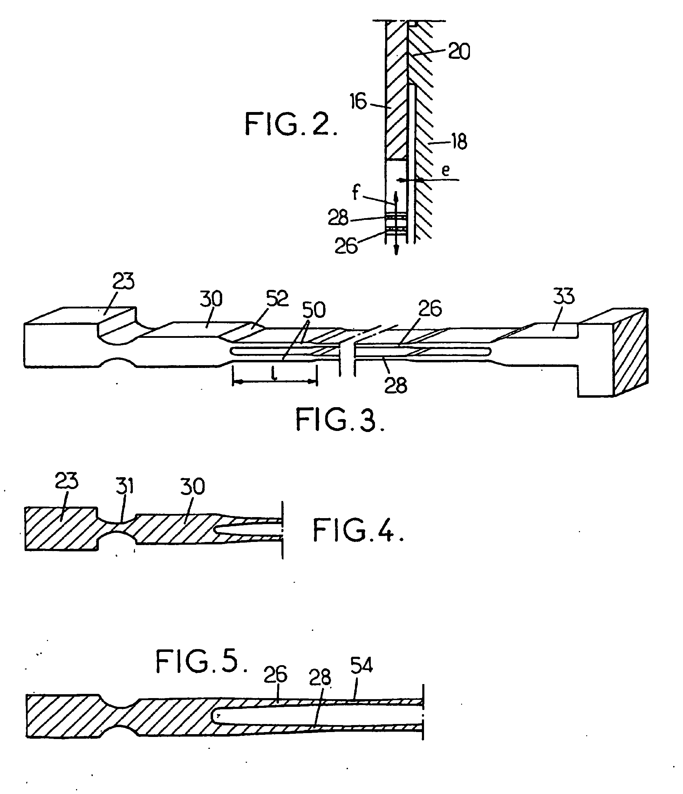

Le détecteur accélérométrique montré schématiquement en figures 1 et 2 a une constitution monolithique. Il peut être regardé comme ayant un corps 12 à deux cellules et des capteurs de force 14a et 14b constitués chacun par une « poutre » formée par un couple de deux lames vibrantes reliées à un circuit de mesure de la différence entre la fréquence de résonance des lames d'une cellule et celle de l'autre cellule.

Le corps 12 présente une base 16 destinée à être fixée à la structure dont l'accélération est à mesurer. L'emplacement de fixation peut alors coïncider avec un centre de symétrie du détecteur. Dans le cas illustré sur les figures 1 et 2, le corps est solidarisé d'un support 18 par collage de sa partie centrale sur une excroissance 20 du support. Avantageusement, le jeu e ménagé entre le support et la grande face en regard du corps 12 est très faible, par exemple de quelques µm dans le cas d'un accéléromètre miniature de forme plate de quelques centaines de µm d'épaisseur. Le support constitue alors une butée limitant le débattement transversal du corps.

Le corps et le support peuvent constituer un ensemble monolithique, fabriqué par des techniques classiques d'attaque chimique. Dans la plupart des cas l'ensemble est en quartz qui a l'avantage d'être piézo-électrique. Dans une variante de réalisation, l'ensemble est en silicium.

La base 16 est reliée, par des articulations 22, à deux masses sismiques ou masses d'épreuve 24a et 24b symétriques par rapport à un axe pouvant correspondre à une zone de fixation unique de la base. Les moyens d'articulation sont d'une seule pièce avec les masses sismiques et avec la base.

Dans le cas illustré chaque masse sismique 24a ou 24b est reliée à la base 16 par une seule articulation 22 orthogonale à l'axe sensible X formant charnière 22 et par le capteur 14a ou 14b. L'articulation 22 est placée sur un bras 23 prolongeant la portion massive de la masse sismique 24a ou 24b et située entre la partie massive et le capteur correspondant 14a ou 14b, de sorte qu'il y a un effet de levier donnant au déplacement de l'attache du capteur une valeur inférieure au déplacement du centre de gravité G de la masse sismique. Du fait de la différence importante de bras de levier de part et d'autre de l'articulation, la « poutre » reste en permanence orientée sensiblement suivant l'axe sensible et travaille en traction-compression. Ainsi les poutres n'influencent pas de façon défavorable le mode de résonance de structure selon l'axe sensible.

Chaque capteur 14a est constitué de deux lames parallèles 26 et 28. Dans le cas illustré, l'épaisseur des lames, dans le plan de la figure 1, est inférieure à leur largeur, dans le plan de la figure 2 ; des lames à section carrée sont également utilisables.

Les lames 26 et 28 sont destinées à vibrer en opposition de phase, suivant la direction indiquée par la flèche f sur la figure 2. Du fait de leur disposition relative, elles sont à des distances différentes de l'articulation 22. Si en conséquence elles étaient indépendamment reliées au bras 23, elles subiraient des contraintes différentes en cas d'accélération suivant l'axe sensible. Ce défaut est écarté, dans le cas de l'invention, en reliant l'une à l'autre les extrémités adjacentes des deux lames parallèles, par un pied 30 qui est à son tour relié au bras 23 par une charnière 31 parallèle à l'articulation 22. La charnière 31 est avantageusement placée, par rapport à l'articulation 22, de façon que le plan qui traverse leurs parties les plus minces passe par le centre de gravité G de la masse sismique correspondante.

Les extrémités des deux lames opposées au pied 30 peuvent être, elles aussi, reliées entre elles et avec la partie centrale 16 par un second pied 33.

Les lames 26 et 28 peuvent être des lames minces de section constante, comme indiqué sur les figures 1 et 2. Il est avantageux de constituer les lames et les articulations de façon que le premier mode d'oscillation de structure ait une fréquence très élevée par rapport à la plage requise pour les accélérations à mesurer. De plus, la flexibilité des lames est avantageusement suffisante pour ne pas provoquer une force de rappel appréciable.

En cas de détecteur accélérométrique destiné à des engins, le spectre au-delà duquel il faut rejeter le premier mode de vibration de structure s'arrête généralement vers 3 kHz.

Le terme "lame" doit être interprété de façon large et comme désignant tout capteur de forme allongée pouvant utiliser l'effet piézoélectrique, l'effet piézorésistif pour la détection, ou, dans une constitution moins avantageuse, un effet capacitif ; l'effet doit se traduire par un signal représentatif des contraintes de traction et de compression longitudinales.

Toute accélération suivant l'axe sensible x provoque la mise en tension longitudinale d'une des poutres et la mise en compression de l'autre poutre. Un circuit relié à des électrodes d'excitation de la vibration des lames à la résonance et relié à des électrodes permettant de détecter la fréquence de résonance permet de déterminer la différence entre la fréquence de résonance commune des deux lames d'une poutre et celle de l'autre poutre et d'en déduire l'accélération.

La constitution qui vient d'être décrite présente de nombreux avantages. L'axe sensible ne change pas sensiblement d'orientation en cas de déplacement de la masse sismique. Le couplage entre les axes sensibles des deux cellules est très faible et le couplage entre les deux oscillateurs est réduit. Les deux lames d'une même poutre sont soumises à la même contrainte.

Le détecteur peut notamment être fabriqué par gravure humide ou par la succession d'une gravure sèche dite "ion track" et d'une gravure chimique.

Dans le cas où le corps est en matériau non piézoélectrique, par exemple en silicium, l'excitation des poutres peut être réalisée par un dépôt local en matériau piézoélectrique ou par in autre procédé physique tel que capacitif ou magnétique.

La figure 1 montre, à titre de simple exemple, un circuit pouvant être associé aux poutres 14a et 14b pour mesurer la fréquence propre de chaque poutre et en déduire l'accélération. Ce circuit comporte deux oscillateurs 32a et 32b dont seul le second est montré en détail. Il comporte également un module 34 de mesure de la différence entre les fréquences des signaux de sortie des oscillateurs. Chacun des oscillateurs est prévu pour maintenir à une valeur constante l'amplitude du courant appliqué aux électrodes des poutres, dont la constitution peut être celle décrite dans l'un des brevets de la demanderesse mentionnés plus haut. L'oscillateur 32b montré en figure 1 comprend un amplificateur 38 dont la boucle de réaction contient les électrodes d'excitation à la résonance des deux lames de la poutre 14b et un amplificateur à gain commandé 40. Des inverseurs permettent de faire vibrer les lames 26 et 28 en opposition de phase. Le gain de l'amplificateur 40 est commandé par un module 44 qui reçoit une consigne de tension sur une entrée 46 et la compare à la tension de sortie de l'amplificateur 38. Du fait que le courant dans les électrodes des lames est maintenu à une valeur constante, fixée par la tension de consigne, les variations de fréquence liées à l'isochronisme sont annulées.

Les sorties des deux oscillateurs sont appliquées au circuit 34 qui détermine la différence df entre les fréquences de résonance et en déduit l'accélération. Cette mesure peut être effectuée de façon numérique, du fait qu'une fréquence peut aisément être transformée en une série d'impulsions dont la fréquence de répétition correspond à la fréquence de résonance.

D'autres constitutions de l'électronique sont possibles.

Dans la variante de réalisation du capteur représenté en figure 3, où les éléments correspondant à ceux de la figure 1 sont désignés par le même numéro de référence, les lames sont identiques l'une à l'autre, mais ont une section droite évolutive par variation d'épaisseur. Pour cela chaque lame, de largeur constante, présente une partie centrale d'épaisseur réduite et deux parties latérales 50 un peu plus épaisses. Les raccordements entre les parties latérales 50 d'une part, la partie centrale et les pieds 30 et 33 d'autre part, s'effectuent avantageusement par des chanfreins évitant les concentrations de contraintes et faciles à réaliser, notamment dans le cas d'une poutre en quartz qui se prête bien à des chanfreins 52.

La longueur I des parties 50 et les épaisseurs peuvent être optimisées à partir d'un calcul par éléments finis tenant compte de la répartition des contraintes lors des vibrations.

Dans la variante de réalisation montrée en figure 4, les deux faces de chaque lame présentent une courbure réduisant l'épaisseur au centre. Au lieu d'une forme asymétrique, telle que montrée en figure 4, on peut utiliser une forme dissymétrique, une seule des deux faces étant en courbe.

Dans le cas représenté en figure 5, chaque lame présente une forme en double biseau, les deux biseaux se raccordant l'un à l'autre dans le plan médian 54 des lames 26 et 28.

L'invention est susceptible de nombreuses variantes de réalisation encore, en matériau piézoélectrique ou non, monolithique ou composite. Par ailleurs, et notamment lorsque le détecteur est constitué de façon monolithique avec le support 18, il est possible de réaliser, en une même opération, des groupes de chacun des deux détecteurs ayant des axes sensibles croisés sur une même tranche de semi-conducteur. Il est également possible d'associer, sur une même tranche, un ou deux détecteurs accélérométriques plats du genre représenté avec un capteur gyrométrique également plat.

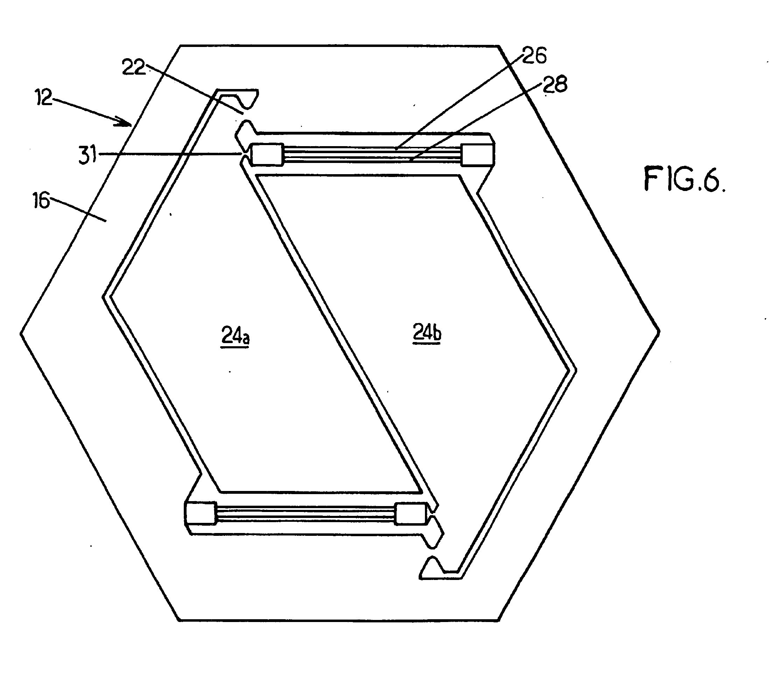

Dans la variante de réalisation de la figure 6 (où les éléments correspondant à ceux de la figure 1 sont désignés par le même numéro de référence) le corps 12 a un périmètre hexagonal, ce qui notamment permet une utilisation optimale d'une tranche de silicium ou de quartz en cas de fabrication collective. Les masses sismiques 24a et 24b ont des bords parallèles à des côtés du périmètre hexagonal. Le centre de gravité de chaque masse est encore dans le plan passant par les axes de la charnière et de l'articulation correspondantes.

## Revendications

1. Détecteur accélérométrique monolithique plat comprenant un corps (12) ayant une base (16), destinée à être fixée à un support (18) dont l'accélération est à mesurer et deux cellules de mesure ayant chacune une masse sismique (24a-24b) reliée à la base par une articulation permettant à la masse de tourner autour d'un axe perpendiculaire à un axe sensible du détecteur, et un capteur de force à poutre vibrante reliant la masse à la base, les cellules étant placées de façon que, lorsqu'une des poutres est soumise à une force de traction due à une accélération suivant l'axe sensible, l'autre poutre est soumise à une force de compression de même valeur, les cellules étant disposées tête-bêche et symétriquement par rapport à un axe, chaque poutre étant constituée d'au moins deux lames (26, 28) parallèles l'une à l'autre et à des distances différentes de l'articulation, les deux lames d'une même cellule étant reliées à la masse sismique de la cellule par l'intermédiaire d'une charnière commune.

2. Détecteur selon la revendication 1, **caractérisé en ce que** les articulations et les capteurs de force sont prévus de façon que le premier mode de vibration de structure des masses soit dans une direction orthogonale à l'axe sensible du détecteur.

3. Détecteur selon la revendication 1 ou 2, **caractérisé en ce que** la dite base (16) est solidarisée par une face d'une excroissance du support.

4. Détecteur selon la revendication 3, **caractérisé en ce que** les masses sismiques sont séparées du support par un jeu faible par rapport à l'épaisseur du corps.

5. Détecteur selon l'une quelconque des revendications 1 à 4, **caractérisé en ce que** la charnière et l'articulation sont alignées avec le centre de gravité de la masse sismique correspondante.

6. Détecteur selon l'une quelconque des revendications 1 à 5, **caractérisé en ce que** les lames sont à bords parallèles et d'épaisseur constante.

7. Détecteur selon l'une quelconque des revendications 1 à 5, **caractérisé en ce que** les lames ont une section droite évolutive.

8. Détecteur selon la revendication 7, **caractérisé en ce que** les lames ont une variation de section droite dans le sens de l'épaisseur, obtenue en donnant aux grandes faces de la lame une forme courbe réduisant la section droite au centre ou obtenue par des chanfreins.

9. Détecteur selon la revendication 7, **caractérisé en ce que,** les lames étant en quartz, les chanfreins sont à 60° de la direction de la lame ou de la direction orthogonale.

10. Détecteur selon l'une quelconque des revendications précédentes, **caractérisé en ce que** les charnières et articulations présentent des parties à 60° de leur axe.

## Claims

1. Flat, monolithic acceleration-measuring detector, comprising a body (12) having a base (16) intended to be fixed to a support (18), the acceleration of which is to be measured, and two measuring cells, each of which has a seismic mass (24a-24b) connected to the base by a joint, enabling the mass to pivot around a axis perpendicular to a sensitive axis of the detector, and a vibrating beam type of force sensor connecting the mass to the base, the cells being placed in such a way that when one of the beams is subjected to a tensile force because of acceleration along the sensitive axis, the other beam is subjected to a compressive force of the same value, the cells being arranged head to tail and symmetrically in relation to an axis, each beam consisting of at least two leaves (26, 28) parallel to each other and at different distances from the joint, the two leaves of a cell being connected to the seismic mass of said cell via a common hinge.

2. Detector according to Claim 1, **characterized in that** the joints and force sensors are provided in such a way that the first structure vibration mode of the masses is in an orthogonal direction to the sensitive axis of the detector.

3. Detector according to Claim 1 or 2, **characterized in that** said base (16) is fixed by a face to a protrusion of the support.

4. Detector according to Claim 3, **characterized in that** the seismic masses are separated from the support by a gap which is small in relation to the thickness of the body.

5. Detector according to any one of Claims 1 to 4, **characterized in that** the hinge and the joint are aligned with the centre of gravity of the corresponding seismic mass.

6. Detector according to any one of Claims 1 to 5, **characterized in that** the leaves have parallel edges and constant thickness.

7. Detector according to any one of Claims 1 to 5, **characterized in that** the leaves have a changing cross-section.

8. Detector according to Claim 7, **characterized in that** the leaves have a varying cross-section in the direction of the thickness, obtained by giving to the larger faces of the leaf a curved shape which reduces the cross-section at the centre, or obtained by chamfers.

9. Detector according to Claim 7, **characterized in that,** the leaves being made of quartz, the chamfers are at 60° from the direction of the leaf or from the orthogonal direction.

10. Detector according to any one of the preceding claims, **characterized in that** the hinges and joints have parts at 60° from their axes.

## Patentansprüche

1. Flacher monolithischer Beschleunigungsmessfühler, umfassend einen Körper (12) mit einer Basis (16), ausgelegt für die Befestigung an einer Halterung (18), deren Beschleunigung zu messen ist, und zwei Messzellen, von denen jede eine seismische Masse (24a-24b) umfasst, welche mit der Basis durch ein Gelenk verbunden ist, das der Masse erlaubt, um eine Achse zu schwenken, die zu einer sensiblen Achse des Messfühlers orthogonal ist, und einen Kraftsensor mit einem Schwingungsbalken, der die Masse mit der Basis verbindet, wobei die Zellen derart platziert sind, dass sie, wenn einer der Balken durch eine Beschleunigung entlang der sensiblen Achse einer Zugkraft ausgesetzt ist, der andere Balken einer Kompressionskraft desselben Wertes ausgesetzt ist, wobei die Zellen bezüglich einer Achse entgegen gesetzt und symmetrisch angeordnet sind, wobei jeder Balken mindestens zwei Blätter (26, 28) umfasst, die zueinander parallel sind und unterschiedliche Abstände zum Gelenk aufweisen, wobei die beiden Blätter einer Zelle mit der seismischen Masse der Zelle mittels eines gemeinsamen Scharniers verbunden sind.

2. Messfühler nach Anspruch 1, **dadurch gekennzeichnet, dass** die Gelenke und die Kraftsensoren derart vorgesehen sind, dass der erste Schwingungsmodus der Massenstruktur in einer Richtung orthogonal zur sensiblen Achse des Messfühlers erfolgt.

3. Messfühler nach Anspruch 1 oder 2, **dadurch gekennzeichnet, dass** die Basis (16) durch eine Seite eines Überstands der Halterung verstärkt ist.

4. Messfühler nach Anspruch 3, **dadurch gekennzeichnet, dass** die seismischen Massen von der Halterung durch ein geringes Spiel bezüglich der Dicke des Körpers getrennt sind.

5. Messfühler nach einem der Ansprüche 1 bis 4, **dadurch gekennzeichnet, dass** das Scharnier und das Gelenk zu dem Schwerpunkt der entsprechenden seismischen Masse ausgerichtet sind.

6. Messfühler nach einem der Ansprüche 1 bis 5, **dadurch gekennzeichnet, dass** die Blätter parallele Ränder und eine konstante Dicke aufweisen.

7. Messfühler nach einem der Ansprüche 1 bis 5, **dadurch gekennzeichnet, dass** die Blätter einen erweiterten geraden Abschnitt aufweisen.

8. Messfühler nach Anspruch 7, **dadurch gekennzeichnet, dass** die Blätter eine Abweichung des geraden Abschnitts bezüglich der Dicke aufweisen, der erhalten wird, indem die großen Seiten des Blatts eine Kurvenform erhalten, die den geraden Abschnitt in der Mitte verringert, oder der durch Abschrägungen erhalten wird.

9. Messfühler nach Anspruch 7, **dadurch gekennzeichnet, dass** die Blätter aus Quarz gebildet sind, dass die Abschrägungen 60° zur Richtung des Blattes oder zur orthogonalen Richtung betragen.

10. Messfühler nach einem der vorangehenden Ansprüche, **dadurch gekennzeichnet, dass** die Scharniere und Gelenke Teile im 60°-Winkel zu ihrer Achse umfassen.
